Europäisches Patentamt

European Patent Office

Office européen des brevets

(11) Publication number: **0 167 409**
**B1**

(12) **EUROPEAN PATENT SPECIFICATION**

(45) Date of publication of patent specification: **09.05.90**

(21) Application number: **85304820.5**

(22) Date of filing: **05.07.85**

(51) Int. Cl.⁵: **F 17 C 13/02,** G 01 F 23/00

(54) **A level gauge for a liquid container.**

(30) Priority: **06.07.84 JP 102782/84 u**

(43) Date of publication of application:
**08.01.86 Bulletin 86/02**

(45) Publication of the grant of the patent:
**09.05.90 Bulletin 90/19**

(84) Designated Contracting States:
**DE FR GB SE**

(56) References cited:
**DE-A-3 339 357**
**FR-A-2 088 284**
**GB-A- 783 399**
**US-A-2 029 405**
**US-A-3 397 577**

(73) Proprietor: **KABUSHIKI KAISHA NERIKI**
**1-6-4 Shimosakabe**
**Amagasakishi Hyogoken (JP)**

(72) Inventor: **Ota, Shiro**
**12, 7-1 Jyakuoji Amagasakishi**
**Hyogoken (JP)**
Inventor: **Nitta, Jiro**
**1, 18-1 Higashiarioka Itamishi**
**Hyogoken (JP)**
Inventor: **Hatori, Teruo**
**113, Nakao Uozumicho Akashishi**
**Hyogoken (JP)**
Inventor: **Miyoshi, Hajime**
**22-6, Hiyoshidai 1 Bancho**
**Takatsukishi Osaka (JP)**
Inventor: **Oi, Akira**
**15-18-1, Tengachaya Nishinariku**
**Osakashi (JP)**

(74) Representative: **Bizley, Richard Edward et al**
**BOULT, WADE & TENNANT 27 Furnival Street**
**London EC4A 1PQ (GB)**

EP 0 167 409 B1

Courier Press, Leamington Spa, England.

## Description

The present invention relates to a gauge, particularly a level gauge for indicating the quantity of liquid within a container. The invention is not limited to but will be described in relation to liquefied carbon dioxide containers.

A container for holding liquefied carbon dioxide is a cylindrical high pressure container. Such containers are usually formed far slenderer in comparison with the fat containers for liquefied petroleum gas which are generally used in the home and seen in the market.

Slender containers such as liquefied carbon dioxide containers are different from liquefied petroleum gas containers in the fact that they are often handled very roughly in transportation. For example, they may be roughly tilted or laid down and rolled over and over.

Therefore, a level gauge assembled in such a container should be especially designed to endure such rough handling, to be free from any damage and to keep its accuracy.

The usual system of this kind adopted for a liquefied petroleum gas container can be seen in US—A—3397577 and comprises a body adapted to be screwed in a threaded hole formed at an upper end of a cylindrical container and a level gauge combined with the body. The level gauge comprises an indicating member inserted in said body which is movable up and down, a rod having upper and lower parts, said upper part inserted in said body and slidable up and down therein and said lower part extending into said container, a detecting member fixed to the upper end of said rod so as to move said indicating member and a long, vertical rigid float inserted in said container freely movable up and down and connected rigidly to the lower end of said rod at the upper end thereof. However, said rod is made so slender that said rod is very easily and permanently bent by the weight of said float, and the accuracy of the level gauge is easily lost.

A casing may be fitted around the float, but in narrow containers this casing has to be so thin that it can easily be damaged. The casing also has to be carefully fitted with a sliding means to enable the float to move up and down therein.

As the result, the usual level gauge disclosed above is unsuitable for, inter alia, liquefied carbon dioxide containers which are handled very roughly.

Therefore, there is a need for a level gauge suitable for use in a long, narrow container which can stand being roughly tilted, laid down, or rolled over and over in handling.

There is also a need for a level gauge for such a container which has an excellent durability and sure performance, while its structure is very simple.

There is a further need for a level gauge for such a container made as economically as possible by using simple articulating or flexible joints, or by using a float made of flexible materials.

US—A—2029405 discloses a multi-articulated float so designed that movement of the liquid level within the container alters the number of articulated portions of the float which are supported on the surface of the liquid.

US—A—3397577 discloses a liquid level gauge which can be removably affixed to a gas cylinder but which does not provide an articulated or flexible joint in the float portion.

According to the invention there is provided a liquid level gauge for a vertically elongate liquid container comprising a mounting portion adapted to be removably affixed into a hole formed in the container, an externally visible level indicator, a rod having a first portion inserted into the mounting portion and slidable therein and a second portion extending from the mounting portion which, when in use, extends into the container, a detecting member fixed to said first rod portion and adapted to adjust the indicator by magnetic attraction therebetween, and a vertically elongate float which is connected to said second rod portion and, when in use, is inserted in said container and is movable in response to the liquid level, characterised in that said vertically elongate float and said second rod portion are connected by an articulated or flexible joint so as to permit contact of said float with the inner periphery of said container at least at the lower part of the float when said container is tilted or laid down, the articulating or flexible joint is articulated or deflected, and at least the most distant end of said float rests against the inner surface of the container. Thus part of the weight of the float is borne by the inner surface and the weight of said float acting on said rod is decreased when said container is tilted or laid down. The bending moment caused by the weight of said float and acting on said rod is cancelled by the articulation or deflection at said articulating or flexible part. As the result, said rod is prevented from permanent bending and damage.

As soon as said container is stood up vertically, said float will be aligned vertically with said rod by gravitation and the normal performance of said level gauge restored.

Said articulating or flexible part may be positioned between said rod and said floating column, on said rod or on said float.

The articulated or flexible part preferably comprises a ring articulated with the lower end of said rod and with the upper end of said floating column.

The articulated or flexible part may otherwise comprise an articulating joint such as universal joint, knuckle joint or a flexible joint such as spring joint or wire joint.

The articulating or flexible part may also comprise a float made of flexible materials. In the case that said floating column is made of flexible material, the upper end of said float may be rigidly fixed with the lower end of said rod.

The float is advantageously provided with a balancing weight at said lower end thereof.

Furthermore, the float is advantageously provided with a cushion or buffer at the lower end thereof to absorb the shock of contact with said inner surface of said container, and to prevent said inner surface of said container and said float from damage caused by such collision.

The indicator preferably has a means of indicating the residual volume of liquid remaining in the container and preventive means for preventing misactuation. Such preventive means may comprise a biasing means such as a spring which biases said indicating means to the correct position corresponding to any position of said detecting member by magnetic attraction acting therebetween.

The inlet port of the valve for filling liquefied carbon dioxide in to the container is advantageously open against the side wall of the container opposite the rod, so as to eliminate any chance of bending the rod as the high pressure liquid is let in to the container. The valve and the level gauge may be combined into a single unit.

Various embodiments of the invention will now be described in more detail and with reference to the accompanying drawings, in which

Fig. 1 is a sectioned front elevation of a level gauge according to the first preferred embodiment of the present invention.

Fig. 2 is a side elevation of the first preferred embodiment of the present invention.

Fig. 3 is a cross section along a line III—III in Fig. 1.

Fig. 4 is a perspective view of a level gauge according to the first embodiment of the present invention, taken to pieces.

Fig. 5 is a partially sectioned front elevation of a level gauge according to the first preferred embodiment of the present invention.

Figs. 6 and 7 are sectioned front elevations of different and modified protective devices protecting the indicator from misactuation according to the present invention respectively.

Figs. 8 to 17 are front elevations of different and modified articulating or flexible parts according to the present invention respectively.

Fig. 18 is a sectioned side elevation of a level gauge assembled in a liquefied petroleum gas container, as known in the art.

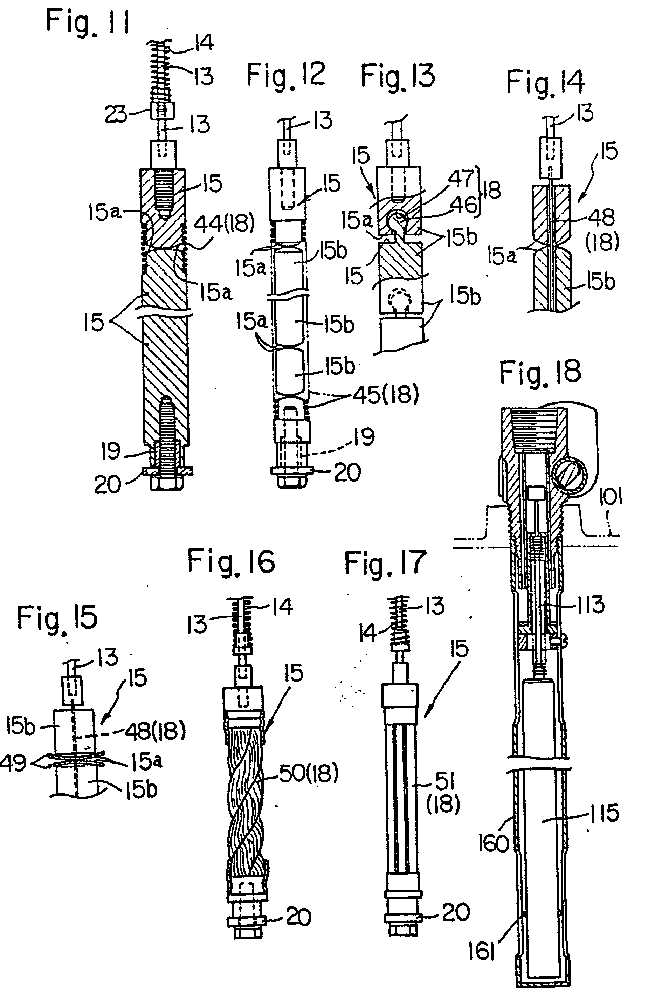

Looking first at the known art shown in Fig. 18, a container 101 has therein a float 115 attached to a rod 113, the system being protected by a thin casing 160. The float moves within the casing on bearings 161.

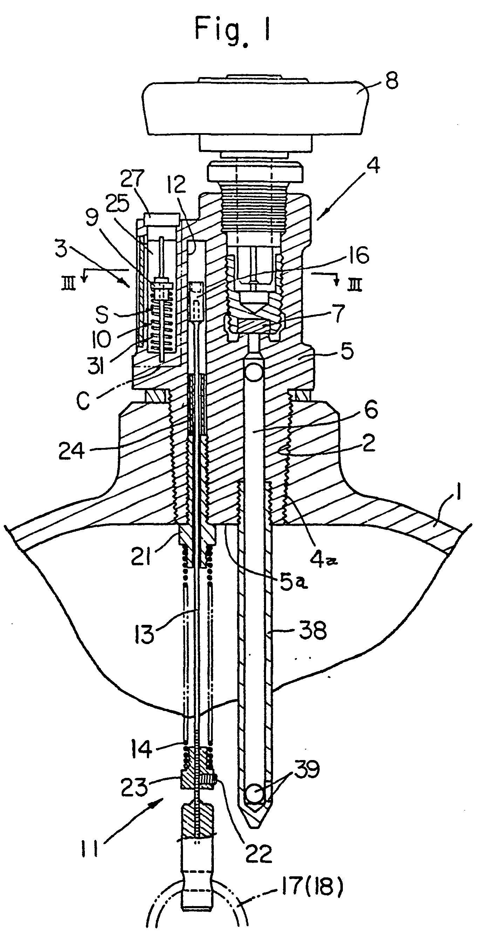

Referring to Figs. 1 to 5, a container 1 for containing carbon dioxide liquefied under high pressure comprises a seamless container of known type formed vertically long. The container 1 having a mouth block at the top thereof is provided with a vertical through hole 2 at the mouth block. The inner periphery of the hole 2 is threaded so as to screw a high pressure valve 4 combined with a level gauge tightly therein.

The body 5 of the valve 4 is made of nonmagnetic material such as brass, having a gas passage 6 for taking out carbon dioxide gas, and a valve member 7 to shut off the passage 6, as shown in Fig. 1. The valve 4 is arranged to allow out gas from inside of the container 1 through the passage 6 opened by moving the valve member 7 with a handle 8. The level gauge 3 for indicating the amount of carbon dioxide contained in the container 1 is assembled in the body 5 at the lateral side of the valve member 7.

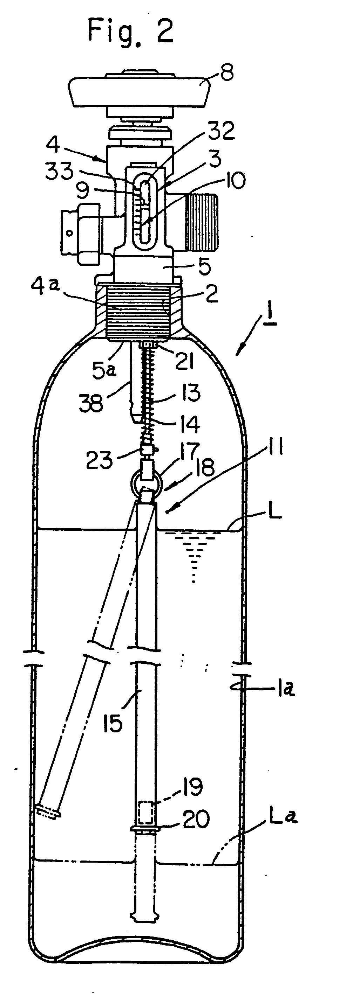

The level gauge 3 comprises an indicator 10 having an indicating member 9 which indicates the amount of liquefied carbon dioxide in the container by the vertical position thereof, and a means for operation 11 which drives the indicating member 9 up and down. As seen in Figs. 1 and 2, the means for operation 11 involves a vertical blind hole 12 drilled in the body 5 near to the indicator 10 from the bottom 5a to the upper part near the top of the body 5, a rod 13 having an upper and a lower part, which upper part is inserted in the hole 12 freely slidable up and down in the hole 12, the lower part extending into the container and a detecting member 16 made of a magnet and fixed on the upper end of the rod 13. The rod 13 is biased by a spring 14 upwardly. A rigid cylindrical float 15 formed long vertically is suspended in the container 1 under the rod 13.

One of the distinguishing features of the present invention is that the rigid float 15 is articulated to the lower end of the rod 13 at the upper end thereof by an articulating or flexible part 18 consisting of a ring 17.

If the rigid floating column 15 was fixed rigidly with the rod 13 (as in a container for containing liquefied petroleum gas) the rod 13 would be permanently bent by the weight of the float 15 if the container 1 were tilted or laid down in handling , such as transportation, and the level gauge 3 would not be able to function accurately thereafter.

However, according to the invention, due to the articulating or flexible part 18 between the rod 13 and the float 15, when the container 1 is tilted or laid down, the float 15 is articulated or bent restorably at the jointed end, that is, at the articulating or flexible part 18, so that the weight of the float 15 acting on the rod 13 is decreased and permanent bending or damage of the rod 13 eliminated. And as soon as the container 1 is stood up vertically again, the float 15 is vertically aligned with the rod by the gravitation, and the rod 13 will be accurately actuated.

The float 15 is advantageously provided with a balancing weight 19 at the lower end, or thereabouts, of the float 15. A cushion 20 made of rubber is adapted to wrap the lower part of the outer periphery of the balancing weight 19, so as to prevent sounding of the container 1 by collision, and damage of the inner periphery of the container 1 and the float 15. The upper end of the spring 14 suspending the float 15 is fixed to the metal fitting 21 which is screwed in the hole 12 at the bottom 5a of the body 5, and through which the rod 13 penetrates slidably up and down. The lower end of the spring 14 is fixed to an adjustable fixing member 23 which vertically adjusts by a screw 22 threaded at the lower part of the rod 13. In the hole 12, a sleeve 24 is inserted to define the lowest position of the detecting member 16. The sleeve 24 and the metal fitting 21 may be made in one piece.

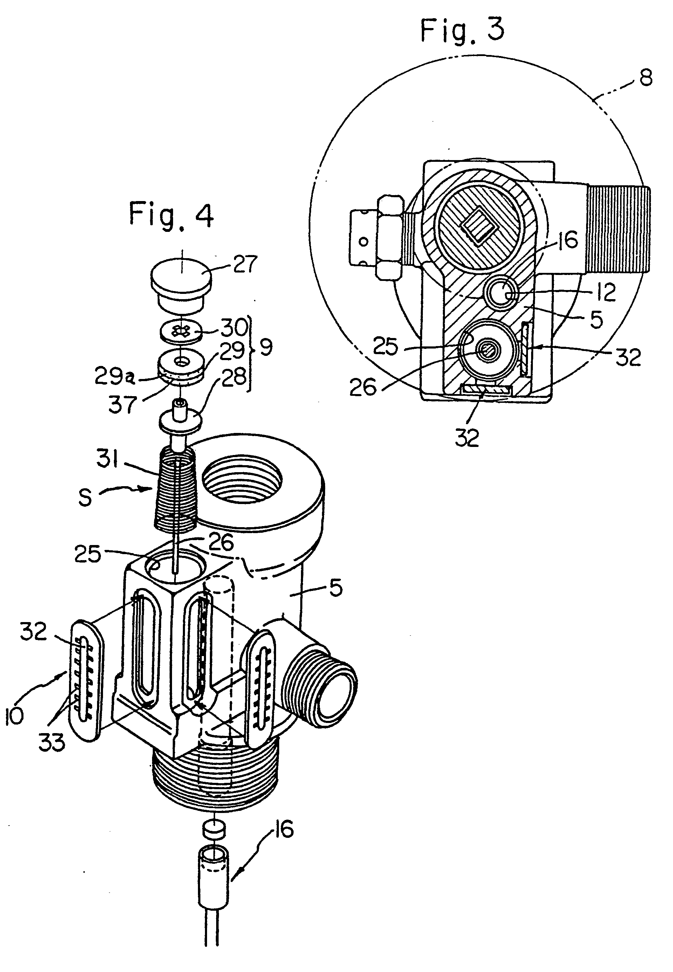

The indicator 10, as shown in Fig. 4, comprises an indicating member 9, a hole 25 for housing the member 9 movable up and down therein, drilled down from the top surface of the body 5 and parallel with the vertical blind hole 12, a guide pin 26, around which the indicating member 9 is fitted slidably up and down, stood in the hole 25, and a cap 27 which fixes the top of the pin 26 to the body 5 by its fitting with the body at the opening of the hole 25.

The indicating member 9 is adapted to move up and down following the detecting member 16 fixed on the upper end of the rod 13. Thus, the indicating member 9 is provided with a slider 28 fitted around the guide pin 26 for making it easy to slide up and down along the pin 26, an annular magnet 29, and a metal seat 30, both fixed to the slider 28.

Preventive means S for preventing the indicating member 9 from the misactuation is inserted between the lower surface of this indicating member 9 and the bottom of the hole 25, biasing the indicating member 9 upward.

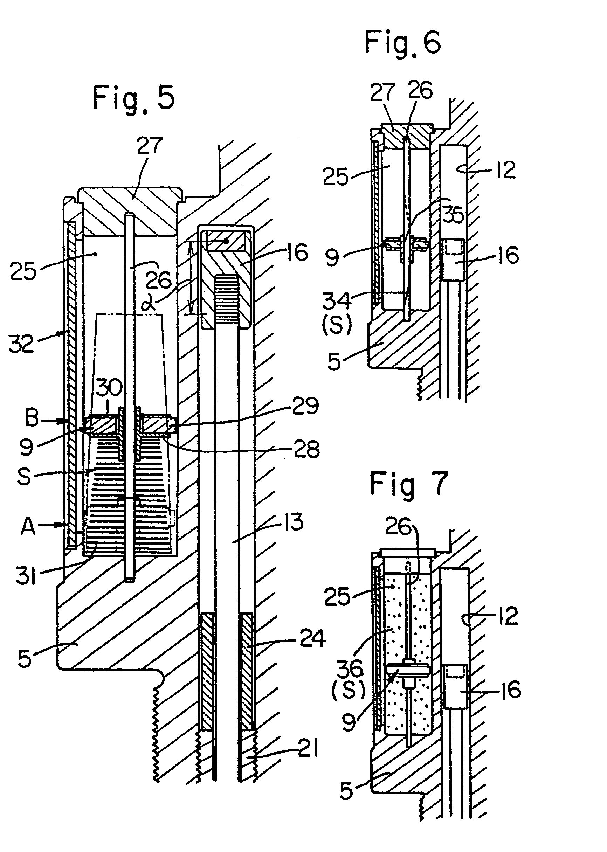

The preventive means S is made of soft compressive spring 31 whose shape at free state is shown by an imaginary line in Fig. 5. The biasing power of the spring 31 is balanced with the weight of the indicating member 9 to elevate it upto a position B higher than the "empty" position A, marked at the lower part of a scale 33 covering an indicating window 32 of the indicator 10, when the indicating member 9 is put on the free spring 31, as in Fig. 5.

When a shock is given to the container 1 or the valve 4 at any occasion such as filling or transportation, the indicating member 9 may be dropped down toward the "empty" position A where the magnetic attraction between the magnet 29 of the indicating member 9 and the detecting member 16 is effective to adjust the position of the former to the correct position corresponding to any position of the latter.

The indicating member 9 dropping toward the "empty" position A is received on the preventive means S comprised of the spring 31 at the higher position B and driven to the position corresponding to the detecting member 16 by the magnetic attraction therebetween, before it is droped to the "empty" position A. Thus, the indicating member 9 is able to move to the correct position and to indicate the amount of carbon dioxide left in the container 1 at any time.

When the motion of detecting member 16 is so rapid that the indicating member 9 cannot follow it, the indicating member 9 drops down to the "empty" position A, out of the range and, by gravity. However, as soon as the indicating member 9 drops to the "empty" position A, it is elevated by the function of the spring 31 to the following range without staying at the "empty" position A, so that the indicating member 9 is always able to recover its correct position, following the detecting member 16 instantly. Thus the indication of the amount of carbon dioxide left is accurate at any time.

A modified preventive means S according to the present invention, as shown in Fig. 6, comprises a spiral groove 34 formed at the periphery of the guide pin 26, so as to produce proper resistance against the motion of the indicating member 9 between the pin 26 and the hole 35 of the indicating member 9, through which the pin 26 is fitted slidable.

As shown in Fig. 7, another modified preventive means S comprises liquid filled in the hole 25, which produces proper fluidity resistance to prevent instant drop of the indicating member 9 to the bottom of the hole 25 when the member 9 is moved out of the following range.

The indicating member 9 may be adapted to be removable, together with other parts surrounding it, from the indicator 10 from the imaginary line C in Fig. 1.

Further, the preventive means may be modified to comprise a weak spring (not shown) suspended under the cap 27 to pull up the indicating member 9.

The magnet 29 is provided with a coloured indication line 37 at its periphery 29a, so as to detect the amount of liquefied carbon dioxide in the container by observing the line 37 through the scale 33 covering the indication window 32 opened at one lateral side of the indicator 10.

A vertical filling pipe 38 having a lower end closed and a filling port 39 near to the lower end is inserted in the container 1 and communicated with the gas passage 6 at the upper end thereof for passage of carbon dioxide gas. The filling port 39 faces the slide wall 1a of the container opposite the means for operation 11, so as to prevent the rod 13 of the means for operation 11 from bending or being damaged by the spout of liquefied carbon dioxide from the filling port 39.

The rod 13 is positioned at the high position in the guide hole 12 by the float 15 when the amount of liquefied carbon dioxide contained in the container 1 is large and the level is as high as that shown by a full line L in Fig. 2.

When the detecting member 16 is elevated up in accordance with the elevation of the rod 13 on which the member 9 is fixed, the magnet 29 of the indicating member 9 attracted to the detecting member 16 by the magnetic attraction thereof is moved up, and the indication line 37, elevated high in the indication window 32, presents that the level in the container 1 is high.

However, the more liquefied carbon dioxide is fed out of the container 1, the lower the level therein float 15 descends and the rod 13 is pulled down until the tension of the spring 14 and the weight taken the floating power acting to the float 15 from the weight of the float 15 are balanced.

When the detecting member 16 descends in accordance with the level in the container, the magnet 29 of the indicating member 9, attracted to the detecting member 16, is moved down and the coloured indication line 37 is seen to descend in the indication window 32, so as to present that the level in the container 1 is low and the amount left has become small.

The float 15 "catches" not only the floating power produced by the liquid phase of the carbon dioxide in the container, but also the floating power produced by the gaseous phase therein which is generated when the temperature is higher than the critical point of carbon dioxide. Therefore, it is possible to accurately detect the total amount left in the container 1 at any desired time, for example, during feeding or at valve operation.

One of the detecting member 16 and the magnet 29 of the indicating member 9 may be substituted by magnetic materials such as iron or steel, instead of magnet.

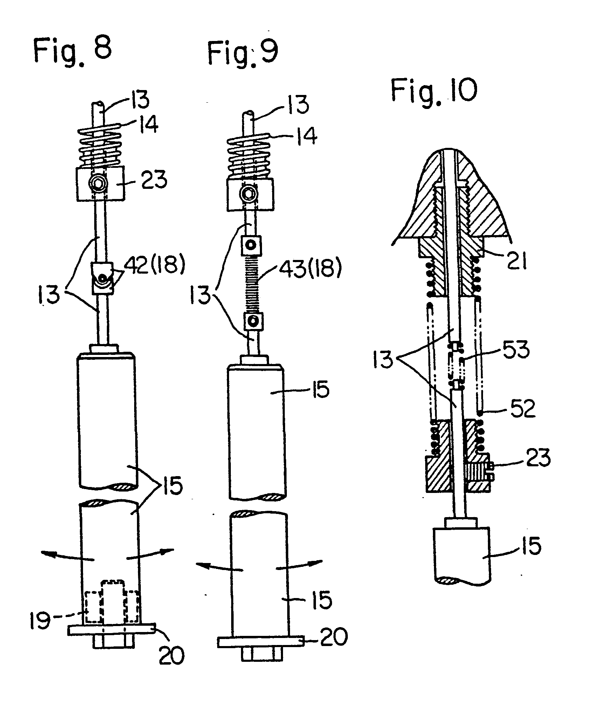

The articulating or flexible part 18 according to the invention may be modified variously, as shown in Figs. 8 to 17, for example.

The modified articulating or flexible part 18 shown in Fig. 8 comprises a universal joint 42 with a cross member inserted on the rod 13.

The modified articulating or flexible part 18 shown in Fig. 9 comprises a spring joint 43 disposed on the rod 12.

The modified articulating or flexible part 18 shown in Fig. 10 comprises double springs 52 and 53, both of which may contribute to suspend the float 15 as well as the spring 14 shown in Figs. 1 and 2.

The modified articulating or flexible part 18 shown in Fig. 11, comprises a spring 44 which connects upper and lower parts of the float 15. The float 15 is divided into these two parts near the top. The contacting surfaces 15a of these pieces are formed in partial spherical surfaces.

The modified articulating or flexible part 18, shown in Fig. 12, comprises a spring 45 connecting the top and the bottom pieces 15b of the float which is divided into a plurality of pieces 15b along its length.

The contacting surface 15a of these pieces 15b are formed in partial spherical surfaces.

The spring 45 may be substituted with a cylindrical net in the embodiment previously described.

In a modified embodiment of the invention, shown fragmentary in Fig. 13, the floating column 15 is divided into a plurality of pieces 15b along its length, and the pieces 15b are articulated with knuckle joints 18, each of which comprises a spherical extrusion 46 projected from one end 15a of each piece 15b and a socket hole 47 concaved in each piece 15b at the other end 15a.

In certain modified embodiments of the invention, shown fragmentary in Fig. 14, the float 15 is divided into two pieces 15b at a position near the top, and the pieces 15b are jointed by a flexible wire 48 which corresponds to the joint 18. The contacting surfaces 15a of the pieces 15b are formed in partial spherical surfaces. In these embodiments, each contacting surface 15a may be formed on a disket 49 made separate from the pieces 15b, as shown in Fig. 14.

The articulating or flexible part 18 may comprise the whole of the float 15 being made of flexible materials such as plastic string, wires, cords 50, as shown in Fig. 16, or a plurality of slender plastic bars 51, as seen in Fig. 17.

The advantages of the present invention can be seen when compared with the known art shown in Fig. 18. Although the casing 160 protects the rod to a certain extent, there are still problems.

(a) It is necessary to protect said rod 113 and said cylindrical float 115 by said tubular casing 160 in order to prevent the rod 113 from permanent bending caused by the weight of the float 115 acting thereon when the container is tilted or laid down. However, as said casing 160 is also hung at one end from the body, it too may be reflected by its own weight. It is necessary to restrain the deflection of said casing within the range where the deflection of the rod 115 does not exceed the range of elastic deflection. To this end, the radial sizes of said casing 160, and consequently those of said level gauge, are large. As a result this valve is not suitable for slender containers such as liquefied carbon dioxide containers.

(b) Moreover, as the casing 160 is made axially long to cover the long float 115, it is necessary to provide a slider 161 comprising ball or projections between the peripheries of the float 115 and the casing 160 in order to make the sliding motion of the rod 113 and the float 115 smoother in the casing 160. Therefore, the level gauge is complex and expensive.

(c) Furthermore, even if the rod 113 and the float 115 were housed in the casing 160 for protection, in the case of a slender container such as that for containing liquefied carbon dioxide that may be roughly tilted or laid down and rolled over and over in transportation, it is possible that the casing 160 could itself deflect and hit the inner periphery of said container 101, and so break by collision with the wall of container.

**Claims**

1. A liquid level gauge for a vertically elongate liquid container (1) comprising a mounting portion (5) adapted to be removably affixed into a hole (2) formed in the container (1), an externally visible level indicator (10), a rod (13) having a first portion inserted into the mounting portion (5) and slidable therein and a second portion extending from the mounting portion (5) which, when in use, extends into the container (1), a detecting member (16) fixed to said first rod portion and adapted to adjust the indicator (10) by magnetic attraction therebetween, and a vertically elongate float (15) which is connected to said second rod portion and, when in use, is inserted in said container (1) and is movable in response to the liquid level, characterised in that said vertically elongate float and said second rod portion are connected by an articulated or flexible joint (18) so as to permit contact of said float with the inner periphery of said container at least at the lower part of the float when said container is tilted or laid down.

2. A gauge as claimed in claim 1, wherein the articulated or flexible joint is a ring, a universal joint with a cross-member, a knuckle joint or a spring joint.

3. A gauge as claimed in claim 1 or claim 2, wherein said float is made of flexible material.

4. A gauge as claimed in any one of claims 1 to 3, wherein the indicator comprises a housing with an indicating member movable therein, which housing is positioned inwards from the outer surface of the mounting portion, and a means for preventing said indicating member from misactuation.

5. A gauge as claimed in claim 4, wherein said preventive means comprises a spring.

6. A gauge as claimed in any one of claims 1 to 5, wherein the mounting portion has a filling pipe extending, when in use, into the container, said pipe having at least one port at the lower end directed to the side wall of said container opposite to said rod.

7. A gauge as claimed in any one of claims 1 to 6, wherein said float is provided with a balancing weight in an end thereof distant from the mounting portion.

8. A gauge as claimed in any one of claims 1 to 7, wherein said float is provided with a cushion or buffer at an end thereof distant from the mounting portion.

9. A gauge as claimed in any one of claims 1 to 8, wherein said indicator is removable from said mounting portion.

## Patentansprüche

1. Niveaumeßgerät für einen in vertikaler Richtung länglichen Flüssigkeitsbehälter (1), mit einem Montageabschnitt (5), der dazu eingerichtet ist, lösbar in einem Loch (2) angebracht zu werden, das im Behälter (1) ausgebildet ist, einem von außen her sichtbaren Niveauanzeiger (10), einem Stab (13) mit einem ersten Abschnitt, der in den Montageabschnitt (5) eingeführt und darin verschieblich ist, und einem zweiten Abschnitt, der sich vom Montageabschnitt (5) aus erstreckt, der sich im Gebrauch in den Behälter (1) hineinerstreckt, einem Meßglied (16), das am ersten Stababschnitt befestigt ist und zum Einstellen des Anzeigers (10) durch magnetische Anziehung zwischen diesen eingerichtet ist, und einem in vertikaler Richtung länglichen Schwimmer (15), der mit dem zweiten Stababschnitt verbunden ist und im Gebrauch in den Behälter (1) eingeführt sowie in Abhängigkeit vom Flüssigkeitsniveau beweglich ist, dadurch gekennzeichnet, daß der in vertikaler Richtung längliche Schwimmer und der zweite Stababschnitt durch eine gelenkige oder flexible Verbindung (18) so verbunden sind, daß die Berührung des Schwimmers mit dem Innenumfang des Behälters mindestens am unteren Teil des Schwimmers ermöglicht wird, wenn der Behälter gekippt oder niedergelegt wird.

2. Meßgerät nach Anspruch 1, wobei die gelenkige oder flexible Verbindung ein Ring, ein Kreuzgelenk mit einem Querstück, eine Gelenkverbindung oder eine Federverbindung ist.

3. Meßgerät nach Anspruch 1 oder Anspruch 2, wobei der Schwimmer aus flexiblem Material hergestellt ist.

4. Meßgerät nach jedem der Ansprüche 1 bis 3, wobei der Anzeiger ein Gehäuse mit einem hierin beweglichen Anzeigeglied, wobei das Gehäuse von der Außenoberfläche des Montageabschnitts aus einwärts angeordnet ist, und eine Einrichtung zum Verhindern der Fehlbetätigung des Anzeigegliedes aufweist.

5. Meßgerät nach Anspruch 4, wobei die Einrichtung zum Verhindern eine Feder aufweist.

6. Meßgerät nach jedem der Ansprüche 1 bis 5, wobei der Montageabschnitt ein Füllrohr aufweist, das sich im Gebrauch in den Behälter hineinerstreckt, wobei das Rohr mindestens eine Öffnung am unteren Ende aufweist, die gegen jene Seitenwand des Behälters gerichtet ist, die dem Stab entgegengesetzt ist.

7. Meßgerät nach jedem der Ansprüche 1 bis 6, wobei der Schwimmer in seinem einen, vom Montageabschnitt abgelegenen Ende mit einem Ausgleichsgewicht versehen ist.

8. Meßgerät nach jedem der Ansprüche 1 bis 7, wobei der Schwimmer in seinem einen, vom Montageabschnitt abgelegenen Ende mit einem Polster oder Puffer versehen ist.

9. Meßgerät nach jedem der Ansprüche 1 bis 8, wobei der Anzeiger vom Montageabschnitt abnehmbar ist.

## Revendications

1. Jauge de niveau de liquide pour un récipient de liquide (1) allongé dans la direction verticale, comprenant une portion de montage (5) adaptée pour être fixée de façon démontable dans un trou (2) formé dans le récipient (1), un indicateur de niveau (10) visible de l'extérieur, une tige (13) possédant une première portion qui est insérée dans la portion de montage (5) et peut coulisser dans celle-ci et une deuxième portion qui part de la portion de montage (5) et qui, lorsque le dispositif est en utilisation, pénètre dans le récipient (1), un élément détecteur (16) fixé à ladite première portion de tige et adapté pour ajuster la position de l'indicateur (10) par attraction magnétique entre lui-même et cet indicateur, et un flotteur (15) allongé dans la direction verticale qui est relié à ladite deuxième portion de tige et qui, en utilisation, est inséré dans ledit récipient (1) et peut se déplacer en réponse au niveau du liquide, caractérisé en ce que ledit flotteur allongé dans la direction verticale et ladite deuxième portion de tige sont reliés par un joint articulé ou flexible (18) de manière à permettre au flotteur d'entrer en contact avec la périphérie intérieure dudit récipient, au moins au niveau de la partie inférieure du flotteur, lorsque ledit récipient est incliné ou couché.

2. Jauge selon la revendication 1, dans laquelle le joint articulé ou flexible est une bague, un joint universel muni d'un élément transversal, un joint à rotule ou un joint en ressort.

3. Jauge selon la revendication 1 ou la revendication 2, dans laquelle ledit flotteur est fait d'une matière flexible.

4. Jauge selon l'une quelconque des revendications 1 à 3, dans laquelle l'indicateur comprend un boîtier avec un élément indicateur mobile dans ce boîtier, lequel boîtier est positionné à l'intérieur par rapport à la surface extérieure de la portion de montage, et des moyens de prévention des défauts d'actionnement de l'élément indicateur.

5. Jauge selon la revendication 4, dans laquelle lesdits moyens de prévention comprennent un ressort.

6. Jauge selon une quelconque des revendications 1 à 5, dans laquelle la portion de montage comprend un tube de remplissage qui plonge dans le récipient en utilisation, ledit tube ayant à son extrémité inférieure au moins un orifice qui regarde vers la paroi latérale dudit récipient qui est à l'opposé de ladite tige.

7. Jauge selon l'une quelconque des revendications 1 à 6, dans laquelle ledit flotteur est muni d'un contre-poids d'équilibrage à son extrémité la plus éloignée de la portion de montage.

8. Jauge selon l'une quelconque des revendications 1 à 7, dans laquelle ledit flotteur est muni d'un coussin ou tampon à son extrémité la plus éloignée de la portion de montage.

9. Jauge selon l'une quelconque des revendications 1 à 8, dans laquelle ledit indicateur peut être séparé de ladite portion de montage.

# Fig. 1

## Fig. 2

# Fig. 3

8

16

12

5

25

26

32

32

# Fig. 4

27

30

29a

29

37

28

9

31

S

25

26

5

32

10

33

16

Fig. 5

Fig. 6

Fig 7

## Fig. 8

## Fig. 9

## Fig. 10

Fig. 11

Fig. 12

Fig. 13

Fig. 14

Fig. 15

Fig. 16

Fig. 17

Fig. 18